# EUROPEAN PATENT APPLICATION

(11) **EP 1 061 595 A1**
(43) Date of publication of application: **20.12.2000**
(21) Application number: 99973593.9
(22) Date of filing: 03.12.1999
(51) Int. Cl.: H01M 4/58

(54) **MATERIAL OF POSITIVE PLATE FOR LITHIUM SECONDARY CELL AND LITHIUM SECONDARY CELL**

(30) Priority: 28.12.1998 JP 37320598
(71) Applicant: JAPAN ENERGY CORPORATION, Tokyo 105-0001 (JP)
(72) Inventor: KINOSHITA, T., Isohara Fa. of Nikko Mat. Comp. Ltd, Kitaibaraki-shi, Ibaraki-ken 319 (JP); KANAZAWA, T., Isohara Fa. of Nikko Mat. Comp. Ltd., Kitaibaraki-shi, Ibaraki-ken 319-1535 (JP); YAMAGUCHI, S., Isohara Fa. of Nikko Mat. Comp. Ltd, Kitaibaraki-shi, Ibaraki-ke (JP)
(74) Representative: Meddle, Alan Leonard
(86) International application number: JP9906788
(87) International publication number: WO0041257

(57) **Abstract**

There are provided a material of the positive pole for a lithium secondary cell comprising a substance represented by a general formula, Li₁₊ₓMn₂₋ₓO_{4+y} (0≤x≤0.08, -0.05≤y≤0.02), wherein the mean oxidation number, M, of Mn in the whole of said substance is 3.540 or more and 3.560 or less, and the mean oxidation number of Mn in 5% by weight of the component on the screen, m, satisfies the equation, M-0.02≤m≤M; and a lithium secondary cell comprising such a material. The material of the positive pole for a lithium secondary cell can be obtained by using an LiMn₂O₄ spinel compound as the material of the positive pole for a lithium secondary cell for maintaining good initial capacity and high charging rate by finding the relationship between the valence number (oxidation number) of Mn and cycle characteristics in said substance.

## Description

### Technical Field

The present invention relates to a material of the positive pole for a lithium secondary cell that can maintain the initial capacity, and excels in charging properties.

### Background Art

Since a lithium secondary cell has a higher energy density than conventional secondary cells, it is widely used in batteries for electronic devices such as cellular phones, portable video cameras, and notebook-type personal computers. The lithium secondary cell is expected to be used as distribution-type power sources for electric motor vehicles and general household equipment in the future, and is actively studied and developed for obtaining batteries of high capacity and high efficiency.

At present, LiCoO₂ is used for the active substance for the positive pole of commercially available lithium secondary cells, but it has disadvantage in that there is a safety problem due to its poor thermal stability, and it is expensive because the available deposits of cobalt itself as an earth resource is short.

As an alternative material, lithium-nickel compound oxide, which has a plenty of resources and is economically advantageous, has been studied. At the present situation, however, this lithium-nickel compound oxide has little been used practically because it has disadvantage of difficulty in the process in which the flow of oxygen is required for synthesizing LiNiO₂, and desired cycle characteristics cannot be achieved because of the irregularity of crystals, for example, caused by the invasion of a part of Ni to the site in which Li must enter.

For these reasons, an LiMn₂O₄ spinel compound, which is less expensive than cobalt or nickel, and its deposited quantity is plenty, has been studied actively. This compound is also expected for uses such as the above-described electric motor vehicles.

In the LiMn₂O₄ spinel compound, a lithium-manganese composite oxide, Li atoms are present on the 8a tetrahedron site, and Mn atoms are present on the 16d octahedron site. The arrangement of oxygen atoms is a densely packed cubic structure, and the basic skeleton is λ-MnO₂. Since lithium ions occupy the tetrahedron site reversibly, little structural breakdown of the basic skeleton occurs in a lithium secondary cell comprising LiMn₂O₄ as the material for the positive pole. Only the expansion and contraction of the crystal lattices occur due to charging and discharging. Therefore, the lithium secondary cell comprising an LiMn₂O₄ spinel compound is characterized by stable charging and discharging.

However, although the LiMn₂O₄ spinel compound has such high thermal stability, secondary cells using this compound as their positive poles have poor cycle characteristics, which hinders their practical use.

Heretofore, efforts for improving cycle characteristics have been made by raising the uniformity of active substances, or using methods such as doping of other substances, but none of these efforts have not been satisfactory.

### Disclosure of the Invention

The object of the present invention is to provide a material for the positive pole of a lithium secondary cell and a lithium secondary cell using an LiMn₂O₄ spinel compound as the material of the positive pole for a lithium secondary cell for maintaining good initial capacity as well as high charging rate by finding the relationship between the valence number (hereafter called "oxidation number") of Mn in the above described substance.

Based on the above-described findings, the present invention provides:
1. A material of the positive pole for a lithium secondary cell comprising a substance represented by a general formula, Li₁₊ₓMn₂₋ₓO_{4+y} (0≤x≤0.08, -0.05≤y≤0.02), wherein the mean oxidation number, M, of Mn in the whole of said substance is 3.540 or more and 3.560 or less, and the mean oxidation number of Mn in 5% by weight of the component on the screen, m, satisfies the equation, M-0.02≤m≤M, and
2. A lithium secondary cell comprising the material of the positive pole for a lithium secondary cell according to the above aspect 1.

### Brief Description of the Drawings

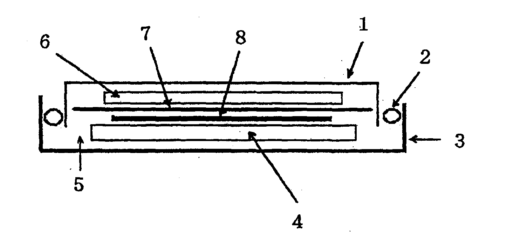

Figure 1 is a schematic sectional view showing a coin-type cell for evaluating the properties of batteries.

### Preferred Embodiments of the Invention

The LiMn₂O₄ spinel compound used in lithium secondary cells is presently produced by a solid phase reaction method, in which a powdered lithium salt is mixed with a manganese salt, and the mixture is heat-treated, in practical levels except special cases in laboratory levels.

The solid phase reaction method utilizes mutual diffusion of lithium in the lithium salt and manganese in the manganese salt as its main reaction. In this case, even diffusion to each other is ideal, but since the lithium salt is thermally unstable, the reaction actually proceeds in the form in which lithium is diffused in the manganese salt.

Since the material manganese salt has a certain particle distribution, the lithium concentration in each particle of the LiMn₂O₄ spinel compound synthesized through such a reaction form is fluctuated.

To describe this in further detail, for example, even if lithium is not diffused to the central portion of a large particle of the manganese salt powder, the diffusion of lithium proceeds to the central portion of a small particle of the powder. Thus, difference in the concentrations of diffused lithium is formed between different sizes of particles, resulting in the fluctuation of concentrations.

If the cycle characteristics of the cell is measured as the fluctuation of lithium concentration between particles is involved, although good load characteristics at a high voltage, inherent to spinel, are obtained in both charging and discharging in the first cycle, charge and discharge capacity is degraded from the second cycle.

On the other hand, it is well known that the cycle characteristics of LiMn₂O₄ having an Mn valence number below 3.5 are significantly poor. As described above, when LiMn₂O₄ is synthesized by the solid phase reaction, the fluctuation between particles is unavoidable, and even if the mean Mn valence number of the entire LiMn₂O₄ is 3.5 or more, the probability to form particles of crystals having the Mn valence number below 3.5 increases, and this is considered to be the cause of poor cycle characteristics.

Also, it is well known that the volume of the active substance of the positive pole is significantly varied on charging and discharging. The volume is contracted by nearly 8% on charging, and a large stress is applied to the grain boundaries of the crystals or the interface between the crystals and carbon binder. As a result, the particles themselves are broken, the conductive paths in the particles are worn, and load characteristics and cycle characteristics are significantly deteriorated.

Increase in stress to the conductive carbon and crystals also have the similar effect, resulting in the wear of the conductive paths, and may cause not only the deterioration of the cycles, but also the deterioration of storage in the charged state.

In order to solve the above problems, the present inventors tried to control the fluctuation of Mn valence numbers, to improve the contacting force between the filler and the active substance, and to control grain boundaries. The fluctuation of Mn valence numbers can be controlled chiefly by the Li/Mn ratio, and when a high initial capacity is desired, the quantity of Li must be decreased, and the Mn valence number must be approached to 3.5 as much as possible.

That is, when a high capacity is desired, the fluctuation of the Mn valence number must be minimized, and the probability of crystal grains of an Mn valence number of 3.5 or less must be decreased. When a solid phase method is used for synthesis, since the fluctuation of the valence numbers depends mainly on the distribution of particle diameters, the distribution of particle diameters must be minimized.

Also, not only the distribution of particle diameters, but also the presence of particles of large particle diameters causes the deviation of the contact area to the lithium source and the fluctuation within particles, the particle size has the upper limit. That is, the material powder must be finer and more uniform.

For the above reasons, the substance represented by the general formula, Li₁₊ₓMn₂₋ₓO_{4+y} (0≤x≤0.08, -0.05≤y≤0.02), in which satisfies the mean oxidation number, M, of Mn in the whole of said substance is 3.540 or more and 3.560 or less, and the mean oxidation number of Mn in 5% by weight of the component on the screen, m, satisfies the equation, M-0.02≤m≤M, is required.

If y is less than -0.05, LiMnO₂ is formed, the single phase of spinel is difficult to obtain. If y exceeds 0.02, LiMnO₂ or Li₂MnO₃ is formed depending on conditions, and the single phase of spinel is also difficult to obtain. Thus, both the cases affect the cycle characteristics adversely.

In order to improve the contact force between the filler and the active substance, it is most effective that the effect of volume expansion of the active substance is concentrated in the one-dimensional direction, and other directions are not affected. To achieve this, it is preferable that several primary particles are one-dimensionally lined to form a long linear active substance, and more preferably, the linear active substance is slightly spiral.

However, if the active substance is entirely formed from one-dimensional particles, the packing density on forming electrodes is considerably lowered; therefore, it is practical to add spherical particles.

Here, the primary particle means a crystal particle of the smallest unit, and one unit means the smallest particle that is no longer divided. This is also called a single particle.

The secondary particle means a group of particles consisting of a number of primary particles, which is seemed as one particle. This is also called an aggregated particle.

The present inventors obtained a finding in which cycle characteristics are significantly improved by using the above-described LiMn₂O₄ as the substance for the positive pole of the material for the positive pole of the lithium secondary cell according to the present invention.

In order to form LiMn₂O₄, manganese dioxide produced by chemical synthesis is used, and is classified by a screen. The component on the screen is pulverized by air pulverization and mixed with a lithium salt. Depending on the particle diameter of the chemically-synthesized manganese dioxide, the component on the screen is mixed with pulverized powder and then with a lithium salt.

It is heat-treated in an inert atmosphere, in the air, or in an oxidizing atmosphere, at a temperature between 650°C and 900°C using heating equipment such as an electric furnace to form LiMn₂O₄. Although the average particle diameter at this time depends on the particle diameter of the chemically-synthesized manganese dioxide, it is preferable in the present invention that the particle diameter is adjusted to 3 µm to 12 µm.

### Examples

The examples of the present invention will be described in detail below. These are examples for facilitating understanding, and the present invention is not limited by these examples. Therefore, the present invention includes various variations within the range not departing from the spirit of the present invention.

In the practice of the present invention, a coin-type cell as shown in Figure 1 was used to evaluate cell properties. This coin-type cell had a positive pole 8 produced by mixing conductive carbon as the active substance for the positive pole, and polyvinylidene fluoride and n-methyl pyrrolidone as the binder, and applying the mixture onto the surface of a stainless sheet 4 using the doctor blade method.

This positive pole 8, together with a separator 7, a metal lithium plate as a negative pole 6, and an EC/DEC solution using 1M-LiPF₆ as the supporting salt as the electrolytic solution 5, was packaged in stainless-steel upper and lower lids 1 and 3, and sealed with a Teflon gasket 2.

This cell was used for evaluating the cell capacity and cycle characteristics as the performance of the cell.

### (Examples 1, 2, and Comparative Examples 1-3)

In Example 1, the average value M of the entire average oxidation numbers of Mn is 3.547, the average oxidation number of Mn in the component on the screen of 5% by weight, m, is 3.535, and the tap density is 2.0 g/cc.

The charging capacity of this Example 1 after 80 cycles is 115 mAh/g (capacity retention after 80 cycles: 95%), indicating the excellent charging cycle characteristics at room temperature.

The above results are shown in Table 1 together with the results of other Example and Comparative Examples.

In Example 2, the average value M of the entire average valence numbers of Mn, adjusted by the classification method, is 3.557, the average value M of valence number of Mn, m, in the component on the screen of 5% by weight is 3.550, and the tap density is 2.2 g/cc.

As is obvious from the above, the charging capacity of this Example 2 after 80 cycles becomes 114 mAh/g (capacity retention after 80 cycles: 96%) by controlling the fluctuation of the Mn valence numbers, indicating the excellent charging cycle characteristics.

Whereas in Comparative Examples 1, 2, and 3, the average values M of the entire average oxidation numbers of Mn are 3.536, 3.545, and 3.588, respectively, and the Mn valence numbers, m, in the components on the screen of 5% by weight are 3.518, 3.520, and 3.572, respectively.

As obviously seen above, in Comparative Example 1, although the average valence number, m, of Mn in the component on the screen of 5% by weight is within the range of the present invention, the average values M of the entire average valence numbers of Mn is smaller than the range of the present invention. In Comparative Example 2, although the average values M of the entire average valence numbers of Mn is within the range of the present invention, the Mn valence number, m, in the component on the screen of 5% by weight is smaller than the range of the present invention. In Comparative Example 3, although the Mn valence number, m, in the component on the screen of 5% by weight is within the range of the present invention, the average values M of the entire average valence numbers of Mn exceeds the range of the present invention.

As a result, the discharging capacity after 80 cycles are 106 mAh/g, 102 mAh/g, and 100 mAh/g (capacity retention after 80 cycles: 85%, 84%, and 92%), respectively, and the charging cycle characteristics are also poorer than the Examples (In particular, Comparative Example 3 has also the initial discharging capacity is as low as 109 mAh/g).

As described above, excellent charging cycle characteristics were confirmed when the average value of Mn valence number of the substance represented by a general formula, Li₁₊ₓMn₂₋ₓO_{4+y} (0≤x≤0.08, -0.05≤y≤0.02) is 3.540 or more and 3.560 or less, and the mean oxidation number of Mn in 5% by weight of the component on the screen, m, is within the range, M-0.02≤m≤M.

Any substances beyond the above-described range of Mn average valence numbers resulted in poorer cycle characteristics.

**Table 1**

| | Mn average valence number m in 5% by weight of the component on the screen | Mn average oxidation number M | Initial discharging capacity (mAh/g) | Discharging capacity after 80 cycles (mAh/g) | Capacity retention after 80 cycles | Tap density (g/cc) |
|---|---|---|---|---|---|---|
| Example 1 | 3.535 | 3.547 | 121 | 115 | 95% | 2.0 |
| Example 2 | 3.550 | 3.557 | 119 | 114 | 96% | 2.2 |
| Comparative Example 1 | 3.518 | 3.536 | 125 | 106 | 85% | 2.2 |
| Comparative Example 2 | 3.520 | 3.545 | 121 | 102 | 84% | 2.3 |
| Comparative Example 3 | 3.572 | 3.588 | 109 | 100 | 92% | 2.3 |

### Industrial Applicability

According to the present invention, the preferable initial capacity can be maintained, and charging efficiencies can be elevated dramatically, by the use of an LiMn₂O₄ spinel compound as the material for the positive pole of a lithium secondary cell, minimizing the fluctuation of Mn valence numbers, improving the contact force with the conductive carbon, and controlling grain boundaries.

## Claims

1. A material of the positive pole for a lithium secondary cell comprising a substance represented by a general formula, Li₁₊ₓMn₂₋ₓO_{4+y} (0≤x≤0.08, -0.05≤y≤0.02), wherein the mean oxidation number, M, of Mn in the whole of said substance is 3.540 or more and 3.560 or less, and the mean oxidation number of Mn in 5% by weight of the component on the screen, m, satisfies the equation, M-0.02≤m≤M.

2. A lithium secondary cell comprising the material of the positive pole for a lithium secondary cell according to claim 1.
